# EUROPEAN PATENT APPLICATION

(11) **EP 4 807 223 A1**
(43) Date of publication of application: **16.09.2026**
(21) Application number: 24888678.0
(22) Date of filing: 05.11.2024
(51) Int. Cl.: F16K 1/22

(54) **BUTTERFLY VALVE**

(30) Priority: 08.11.2023 JP 2023190566
(71) Applicant: Asahi Yukizai Corporation, Nobeoka-shi, Miyazaki 882-8688 (JP)
(72) Inventor: KAI, Ryohei, Nobeoka-shi, Miyazaki 882-8688 (JP)
(74) Representative: DTS Patent- und Rechtsanwälte PartmbB
(86) International application number: PCT/JP2024/039209
(87) International publication number: WO 2025/100383

(57) **Abstract**

A butterfly valve 1 comprises a cylindrical valve main body 2, a valve seat 3 provided on the inner peripheral surface of the valve main body 2 and provided with two opposing through-holes 3a, a disk-shaped valve body 10 configured come into close contact with the valve seat 3 to close a flow passage, a valve shaft 4 that penetrates through the through-holes 3a of the valve seat 3 and rotatably supports the valve body 10 in relation to the valve main body 2, and a sliding contact member 20 provided on the valve body 10 so as to be in close sliding contact with the valve seat 3 during rotation of the valve body 10. The sliding contact member 20 is configured to reduce friction resistance with the valve seat 3 or the amount of wear of the valve seat during rotation of the valve body 10 more than when the sliding contact member 20 is not provided.

## Description

### FIELD

The present invention relates to a butterfly valve.

### BACKGROUND

In general, a butterfly valve has a cylindrical valve body, a rubber valve seat provided an inner circumferential surface of the valve body and provided with two facing through holes, a disc shaped valve element configured to closely contact the valve seat to close a flow path, and valve stems passing through the through holes of the valve seat to support the valve element to be able to rotate with respect to the valve body. The butterfly valve makes the valve element rotate together with rotation of the valve stems to open and close a flow path through the valve body.

Known in the art is a butterfly valve using an O-ring to seal a clearance between a valve stem and a through hole of a valve body in which the valve stem is inserted so as to prevent leakage of fluid to the outside (PTL 1). Specifically, in the butterfly valve described in PTL 1, a tubular member called a "seal tube" is arranged inside of a through hole with respect to the valve stem and O-rings are attached to each of the inner circumferential surface and outer circumferential surface of the tubular member to thereby prevent leakage of fluid along the through hole.

Further, the valve seat is made of rubber, so the clearance between the portion around the through hole of the valve seat and the valve element abutting against that portion and the clearance between the inside surface of the through hole of the valve seat and the valve stem inserted into the through hole are sealed by elastic deformation of the rubber. That is, due to the resilience due to elastic deformation of the valve seat, the valve seat closely contacts the valve element or valve stem and prevents the inflow of fluid inside the through hole of the valve seat and in turn inside the through hole of the valve body.

### [CITATION LIST]

### [PATENT LITERATURE]

[PTL 1] Japanese Unexamined Patent Publication No. 2012-57740

### SUMMARY

### [TECHNICAL PROBLEM]

The portion around a through hole of a valve seat is constantly compressed by the valve element abutting against that portion. In other words, due to being constantly compressed by the valve element, surface pressure due to resilience is generated at that portion whereby a reliable seal is realized. Opening and closing of the butterfly valve, that is, rotation of the valve element around the valve stem, causes the rubber valve seat to gradually become worn. In particular, the portion around a through hole of the valve seat is constantly subjected to surface pressure compared to other portions from which the valve element separates due to opening and closing of the butterfly valve, therefore is more susceptible to wear. If the repeated opening and closing operations cause the portion around a through hole of the valve seat to become greatly worn, the surface pressure falls compared with before wear and as a result the sealability falls.

The present invention has as its object the provision of a butterfly valve able to maintain the sealability of the surroundings of a through hole of a valve seat with respect to an valve element.

### [SOLUTION TO PROBLEM]

According to one aspect of the present invention, there is provided a butterfly valve comprising a cylindrical valve body, a valve seat provided an inner circumferential surface of the valve body and provided with two facing through holes, a disc shaped valve element configured to closely contact the valve seat to close a flow path, valve stems passing through the through holes of the valve seat to support the valve element to be able to rotate with respect to the valve body, and a sliding contact part provided at the valve element so as to be able to closely contact and slide with the valve seat at the time of rotation of the valve element, the sliding contact part being configured so as reduce a frictional resistance with the valve seat or an amount of wear of the valve seat at the time of rotation of the valve element compared with a case where no sliding contact part is provided.

The sliding contact part may be a member separate from the valve element. The sliding contact part may be an injection molded part formed with a ring-shaped parting line at its surface and the valve seat and the valve element may closely contact each other at least radially outward from the parting line. The sliding contact part may have a projection shaped mating projection formed in a ring shape and the valve element may have a mating recess formed so as to mate with the mating projection. A sealing part configured so as to make the mating projection and the mating recess closely contact in the radial direction is provided. The sealing part may be a projection provided at one of the mating projection or the mating recess or an elastic member arranged between the mating projection and the mating recess.

### [ADVANTAGEOUS EFFECTS OF INVENTION]

According to the aspects of the present invention, the common effect is exhibited of provision of a butterfly valve able to maintain the sealability of the surroundings of a through hole of a valve seat with respect to an valve element.

### BRIEF DESCRIPTION OF DRAWINGS

FIG. 1 is a front cross-sectional view of the time of closing of a butterfly valve according to an embodiment of the present invention.
FIG. 2 is a cross-sectional view along the line A-A of FIG. 1.
FIG. 3 is a perspective view of a sliding contact member.
FIG. 4 is a disassembled perspective view of an valve element and a sliding contact member.
FIG. 5 is an enlarged perspective view of an valve element and sliding contact member.
FIG. 6 is a partial cross-sectional perspective view of an valve element and sliding contact member.
FIG. 7 is a partial cross-sectional view of the vicinity of the sliding contact member of FIG. 2.
FIG. 8 is an enlarged perspective view of an valve element and sliding contact member showing a portion abutting against a valve seat.
FIG. 9 is a partial cross-sectional view of an valve element and sliding contact member showing another sealing part.
FIG. 10 is a perspective view of another sliding contact member.

### DESCRIPTION OF EMBODIMENTS

Below, while referring to the drawings, an embodiment of the present invention will be explained in detail. Throughout the drawings, corresponding component elements will be assigned common reference notations.

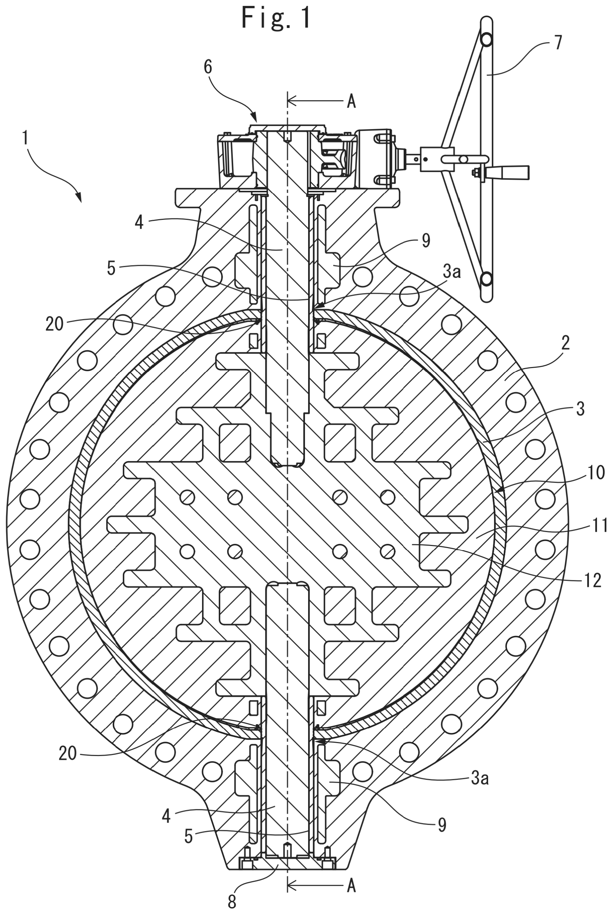

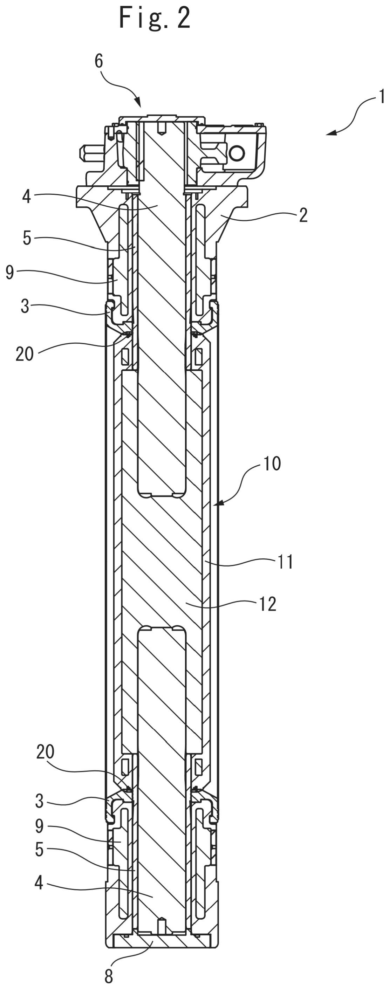

FIG. 1 is a front cross-sectional view of the time of closing of a butterfly valve 1 according to an embodiment of the present invention, while FIG. 2 is a cross-sectional view along the line A-A of FIG. 1. The butterfly valve 1 has a substantially ring-shaped or cylindrical valve body 2 having projections at top and bottom locations, a valve seat 3 provided at an inner circumferential surface of the valve body 2 and having two facing through holes 3a, a disc-shaped valve element 10 formed so as to closely contact the valve seat 3 and close a flow path, two valve stems 4 passing through the through holes 3a of the valve seat 3 and supporting the valve element 10 to be able to rotate with respect to the valve body 2, bushes 5 made of plastic and inserted over the valve stems 4, a handle 7 connected to one of the valve stems 4 through a gear mechanism 6, and a valve stem holder 8 arranged at the bottom part of the valve body 2 and supporting the other of the valve stems 4. Furthermore, the butterfly valve 1 has a ring-shaped sliding contact member 20 as a sliding contact part provided at the valve element 10 so as to closely contact and slide with the valve seat 3 at the time of rotation of the valve element 10. The sliding contact member 20 is attached to the valve element 10 by mating.

The valve body 2 is formed from a plastic material. Inside of the surroundings of the through holes through which the valve stems 4 are inserted, metal insert members 9 are included for reinforcement. The gear mechanism 6 is a conventional type comprised of a cylindrical worm and worm wheel. Rotational torque applied to the handle 7 is transmitted through the gear mechanism 6 to the valve stems 4. Further, to transmit the rotational torque applied to the handle 7 to the valve element 10 by the valve stems 4, the valve stems 4 are supported by the valve body 2 through bushes 5 to be able to rotate and are connected to the valve element 10 to be unable to rotate. The valve element 10 is integrally formed from a plastic contour-forming member 11 forming a disc-shaped outer shape and a metal core member 12 surrounded by the contour-forming member 11. The contour-forming member 11 and the core member 12 are, for example, formed integrally by injection molding. The valve element 10 may also omit the core member and be formed from only the contour-forming member 11.

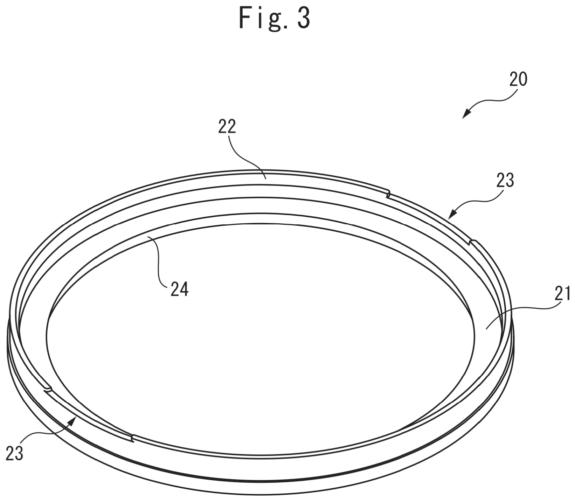

FIG. 3 is a perspective view of the sliding contact member 20. The sliding contact member 20 has a flat-shaped and ring-shaped sliding contact part 21 and a cylindrical mating rib 22 as a mating projection. A center axis of the mating rib 22 matches with the center of the ring-shaped sliding contact part 21. An outside diameter of the mating rib 22 is just slightly smaller than a diameter of the sliding contact part 21. At an end face of the mating rib 22 at an opposite side from the sliding contact part 21, two recesses 23 cut out to uniform depths are formed. The two recesses 23 are arranged symmetrically about the center axis of the mating rib 22. At the radially inside inner surface of the sliding contact part 21, a ring-shaped slanted surface 24 is formed. The slanted surface 24 plays the role of guiding the valve stems 4 when inserting the valve stems 4 into the insertion holes of the valve element 10 in the state where the sliding contact member 20 is attached to the valve element 10.

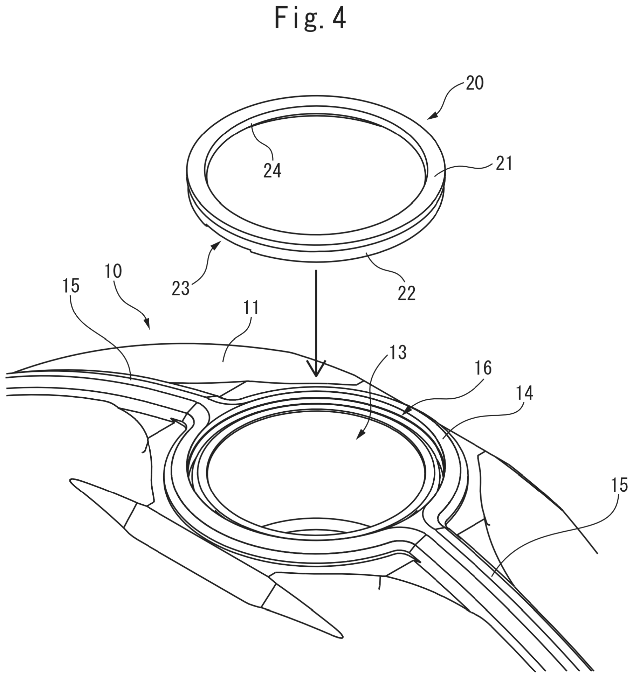

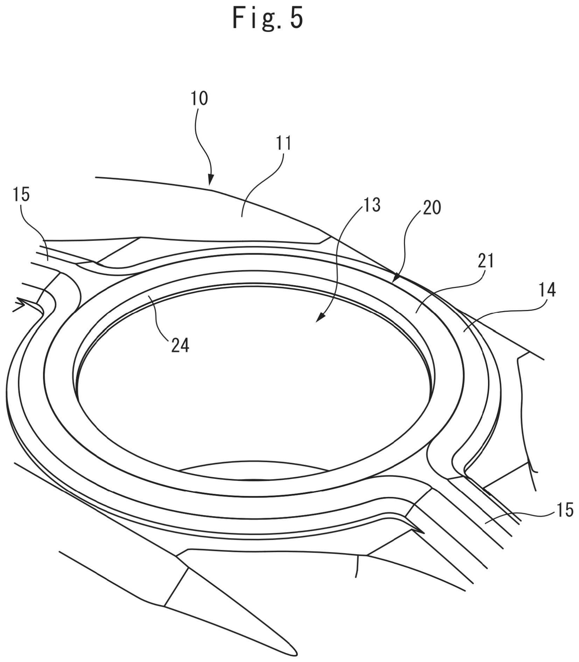

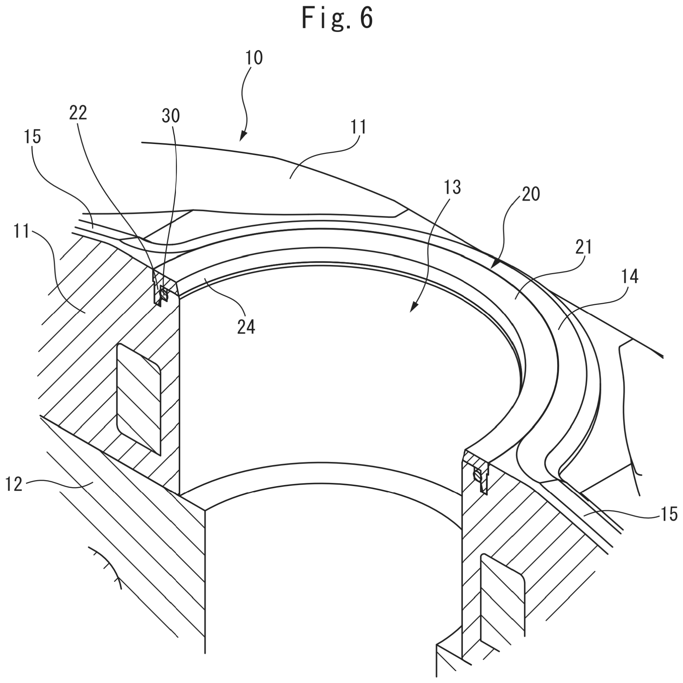

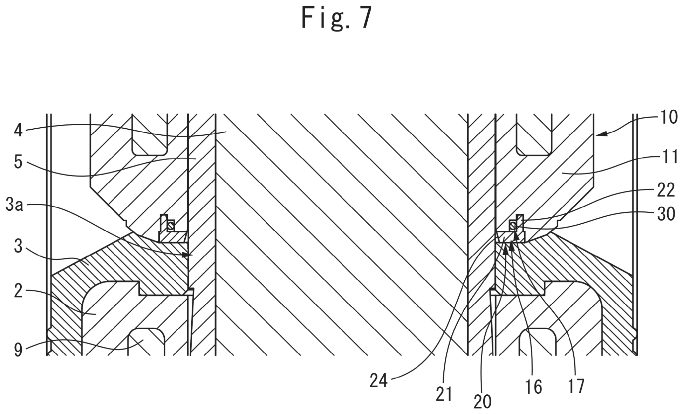

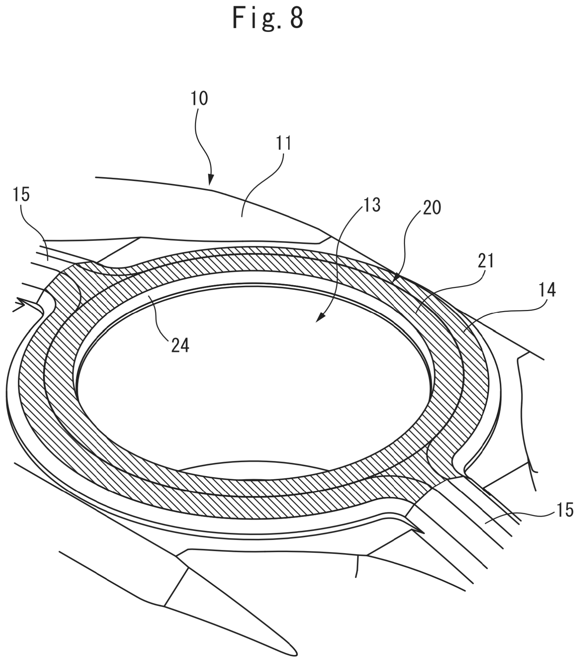

FIG. 4 is a disassembled perspective view of the valve element 10 and the sliding contact member 20, FIG. 5 is an enlarged perspective view of the valve element 10 and sliding contact member 20, FIG. 6 is a partial cross-sectional perspective view of the valve element 10 and the sliding contact member 20, FIG. 7 is a partial cross-sectional view of the vicinity of the sliding contact member 20 of FIG. 2, and FIG. 8 is an enlarged perspective view of the valve element 10 and the sliding contact member 20 showing a portion abutting against the valve seat 3.

The disc-shaped valve element 10 is formed with two insertion holes 13 into which the two valve stems 4 are inserted. At the respective surroundings of the insertion holes 13, stem sealing parts 14 raised from the surroundings are formed. At the outer circumferential surface of the valve element 10, outside sealing parts 15 raised from the surroundings are similarly formed so as to connect the two stem sealing parts 14. At the time of closing the butterfly valve 1 the stem sealing parts 14 and outside sealing parts 15 closely contact the valve seat 3 over the entire circumference whereby the flow path is closed.

At the surroundings of the insertion holes 13, radial inside of the stem sealing part 14, a mating recess 16 configured in a recessed shape able to mate with the mating rib 22 is formed. At the inside of the mating recess 16, two projections (not shown) complementary with the recesses 23 of the sliding contact member 20 are formed. If making the sliding contact member 20 mate with the mating recess 16 of the valve element 10, the recesses 23 of the sliding contact member 20 and the two projections formed at the mating recess 16 intermesh. For this reason, the sliding contact member 20 engages with the valve element 10 about its center axis. At the time of rotation of the valve element 10, the sliding contact member 20 rotates integrally together with the valve element 10.

At the inside of the mating recess 16 of the valve element 10, an O-ring 30 is placed between the valve element 10 and the sliding contact member 20. Specifically, a ring-shaped holding recess 17 is formed at the radial inside inner wall of the mating recess 16 (FIG. 7). The O-ring 30 is arranged at the holding recess 17 between the inner wall of the mating recess 16 and the radial outside inner wall of the mating rib 22 of the sliding contact member 20. When making the sliding contact member 20 mate with the valve element 10, the O-ring 30 arranged in the holding recess 17 prevents leakage of fluid into the inside of the insertion holes 13 through the mating surfaces of the valve element 10 and sliding contact member 20. That is, the O-ring 30 forms a sealing part making the mating projection comprised of the mating rib 22 and the recess 16 closely contact each other in the radial direction. The O-ring 30 may also be arranged between the radially inside inner wall of the mating recess 16 and the radially outside outer wall of the mating rib 22 of the sliding contact member 20. Instead of the O-ring 30, another elastic member able to achieve sealability may also be used.

The sliding contact member 20 is a sliding contact part provided at the valve element 10 so as to closely contact and slide against the valve seat 3 at the time of rotation of the valve element 10. In particular, the sliding contact member 20 constantly closely contacts and slides against the valve seat 3 from the fully closed state of the butterfly valve 1 to the fully open state. In other words, the shape and size of the sliding contact member 20 are determined so that at least part of the portion of the valve element 10 constantly closely contacting and sliding against the valve seat 3 from the fully closed state of the butterfly valve 1 to the fully open state is covered.

The sliding contact member 20 is configured so as to reduce the frictional resistance with the valve seat 3 or amount of wear of the valve seat 3 at the time of rotation of the valve element 10 compared with the case where no sliding contact member 20 is provided. Specifically, the material of the sliding contact member 20 etc. are determined so that the frictional resistance of the valve seat 3 and sliding contact member 20 at the time of rotation of the valve element 10 is reduced from the frictional resistance of the valve seat 3 and contour-forming member 11 of the valve element 10. Further, the sliding contact member 20 is formed by a material with a lower wear property than the valve seat 3. The sliding contact member 20, for example, is formed from a plastic material by injection molding, but may also be formed by a metal material.

The valve body 2 is, for example, formed from polypropylene or polyvinylidene fluoride, polyvinyl chloride, a phenol resin, polydicyclopentadiene, or other plastic material or stainless steel, aluminum, or other metal. The valve seat 3, for example, is formed from ethylene propylene diene rubber or a fluororubber or other plastic material. The contour-forming member 11 of the valve element 10, for example, is formed from polypropylene or polyvinylidene fluoride, polyvinyl chloride, a phenol resin, polydicyclopentadiene, or other plastic material or stainless steel, aluminum, or other metal. As opposed to this, the sliding contact member 20 is, for example, formed from PTFE (polytetrafluoroethylene) or high density polyethylene, high molecular weight polyethylene, polyacetal, MC nylon, or other plastic material and fiber- and metal-reinforced materials of these plastic materials. In particular, if the valve element 10 is formed from a metal, the sliding contact member 20 is preferably formed from a metal-reinforced material.

By the butterfly valve 1 having the sliding contact member 20, wear of the valve seat 3 due to repeated opening and closing operations can be suppressed. As a result, it is possible to also suppress a drop in surface pressure due to resilience of the compressed valve seat 3 and possible to maintain the sealability of the surroundings of the through holes 3a of the valve seat 3 with respect to the valve element 10. Furthermore, the sliding contact member 20 is an integrally formed ring-shaped member, therefore can be more easily and inexpensively produced compared with the seal structure described in PTL 1.

Referring to FIG. 7, the valve element 10 abuts against the valve seat 3 whereupon the surroundings of the through holes 3a of the valve seat 3 are compressed by elastic deformation. That is, the valve seat 3 is compressed by the sliding contact member 20 and the portion of the valve element 10 around it. In FIG. 8, in the valve element 10 including the sliding contact member 20, the portion abutting against the valve seat 3 elastically deformed is shown by the hatching. FIG. 8 differs from FIG. 5 only on the point of the hatching being added.

If the sliding contact member 20 is formed by injection molding, a parting line due to the molds is formed in a ring shape at the surface of the sliding contact part 21. Depending on the position of the parting line and the seal position of the valve seat 3 and valve element 10, the possibility arises of leakage from the primary side to the secondary side at the time of closing of the butterfly valve 1 through the surroundings of the parting line raised from the surroundings. However, as shown in FIG. 8, the portion of the valve element 10 in the surroundings of the sliding contact member 20 directly abuts against and closely contacts the valve seat 3. In other words, the valve seat 3 and valve element 10 closely contact at least radially outward from the parting line of the sliding contact member 20. For this reason, even if the parting line were positioned at the surface of the sliding contact part 21 of the sliding contact member 20, leakage of fluid is prevented due to the valve seat 3 and portion of the valve element 10 in the surroundings of the sliding contact member 20 closely contacting.

Note that, as shown in FIG. 7 and FIG. 8, the portion of the valve element 10 in the surroundings of the sliding contact member 20 directly contacts the valve seat 3. That portion is easily worn compared with the portion of the valve seat 3 abutting against the sliding contact member 20. However, the portion of the valve element 10 in the surroundings of the sliding contact member 20 is farther away from the center axis of the valve element 10. Due in part to this, from the viewpoint of the resilience due to compression at the portion of the valve seat 3 which that portion abuts, the ratio of contribution to the surface pressure which affects the sealability is small.

At the time of rotation of the valve element 10, if a rotational torque due to frictional resistance with the valve seat 3 is applied to the sliding contact member 20, the projections of the mating recess 16 of the valve element 10 and the recesses 23 of the sliding contact member 20 engage, whereby the sliding contact member 20 will not rotate with respect to the valve element 10. Note that, at the time of rotation of the valve element 10, if mating of the valve element 10 and sliding contact member 20 or frictional resistance with the sealing part, that is, the O-ring 30, causes the sliding contact member 20 to integrally rotate together with the valve element 10, the projections of the valve element 10 and the recess 23 of the sliding contact member 20 may be omitted. The projections of the valve element 10 and the recesses 23 of the sliding contact member 20 may also be omitted and the valve element 10 and sliding contact member 20 prevented from integrally rotating. To make the parts reliably integrally rotate, it is sufficient that there be at least one projection of the valve element 10 and recess 23 of the sliding contact member 20. There may also be three or more projections of the valve element 10 and recesses 23. As a rotation stopping part for making the valve element 10 and sliding contact member 20 integrally rotate, it is also possible to further provide a recess inside the mating recess 16 of the valve element 10 and a projection at an end face of a mating rib 22 of the sliding contact member 20.

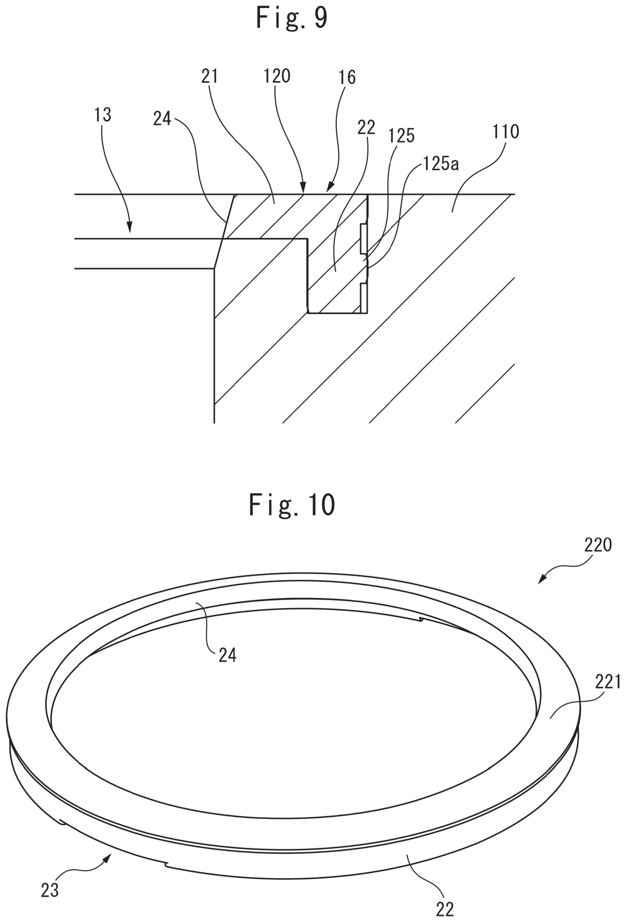

FIG. 9 is a partial cross-sectional view of an valve element 110 and sliding contact member 120 showing another sealing part. The valve element 110 differs from the above-mentioned valve element 10 on the point of not having a holding recess 17 inside the mating recess 16. For this reason, no O-ring is provided at the valve element 110. The sliding contact member 120 differs from the above-mentioned sliding contact member 20 in the shape of the mating rib. The mating rib 22 of the sliding contact member 120 has a ring-shaped projection 125 at its outer circumferential surface. The ring-shaped projection 125 has a cylindrical outer circumferential surface 125a. The outside diameter of the outer circumferential surface 125a of the ring-shaped projection 125 is just slightly larger than the inside diameter of the radially outside inner wall of the mating recessed part 16 of the valve element 110 which the sliding contact member 120 mates with.

Therefore, when making the sliding contact member 120 mate with the valve element 110, leakage to the inside of the insertion holes 13 of the fluid through the mating surfaces of the valve element 110 and sliding contact member 120 is prevented by the ring-shaped projection 125. That is, the ring-shaped projection 125 forms a sealing part radially between the mating projection comprised of the mating rib 122 and the mating recess 116. A sealing part formed by the ring-shaped projection 125 of the sliding contact member 120 can be formed more inexpensively than a sealing part formed using an O-ring 30.

Note that, in addition to the sealing part using the ring-shaped projection 125, a sealing part using the above-mentioned O-ring 30 may be further arranged in the structure. The ring-shaped projection 125 may also be provided at the inner circumferential surface of the mating rib 22. The ring-shaped projection 125 may also be provided at the radially outside inner wall of the mating recess 16 of the valve element 110 rather than the sliding contact member 120. In short, the sealing part is a projection provided at one of the mating projection or mating recess or an elastic member arranged between the mating projection and mating recess.

FIG. 10 is a perspective view of another sliding contact member 220. The sliding contact member 220 differs from the above-mentioned sliding contact member 20 in only the shape of the sliding contact part 221. That is, in the sliding contact member 20, the surface of the sliding contact part 21 abutting against the valve seat 3 is flat (FIG. 4), while in the sliding contact member 220, the surface of the sliding contact part 221 abutting against the valve seat 3 is a convex curved surface. Specifically, in the cross-section along the radial direction, that is, the cross-section of the plane passing through the center axis of the sliding contact member 220, the surface of the sliding contact part 221 has an arc-shaped contour. In more detail, the surface of the sliding contact part 221 is formed in ring shape including a first spherical surface having as a radius a radius of curvature of an arc at the cross-section. The center of the first spherical surface is positioned on the center axis. On the other hand, the portion of the valve element near the sliding contact member 220 of the valve element at which the sliding contact member 220 is attached is also formed as a surface including the first spherical surface. Furthermore, regarding the valve seat used together with the valve element at which the sliding contact member 220 is attached, at least the surroundings of the through hole of the valve seat which the surface of the sliding contact part 221 of the sliding contact member 220 abuts is formed as a recessed curved surface substantially complementary with the surface of the sliding contact part 221, that is, as a recessed curved surface including the surface of the first spherical surface. Note that, the surroundings of the through holes of the valve seat may also be a recessed curved surface including the surface of a second spherical surface having a larger radius than the first spherical surface.

The surface of the sliding contact part 221 of the sliding contact member 220 is part of a spherical surface, and the corresponding surface of the valve seat is a concave curved surface substantially complementing the spherical surface, that is, the seal surface is part of the spherical surface, whereby the valve seat can be prolonged in service life and the seal torque can be reduced.

In the above-mentioned embodiment, the mating rib of the sliding contact member is used to attach it to the valve element, but any structure can be employed to attach the sliding contact member to the valve element. For example, in the above-mentioned embodiment, the mating rib used as the mating projection was cylindrical in shape, but the mating projection may also be comprised of a plurality of projections and the mating recess may be configured to mate with the mating projection. Further, the valve element has a separate sliding contact member as a sliding contact part, but the sliding contact part may also be formed integrally with the valve element by two-color molding etc. Furthermore, in the above-mentioned embodiment, the valve element side is provided with the sliding contact part, but the valve seat side may also be provided with a separate or integral sliding contact part.

### REFERENCE SIGNS LIST

1 butterfly valve
2 valve body
3 valve seat
3a through hole
4 valve stem
5 bush
6 gear mechanism
7 handle
8 valve stem holder
9 insert member
10 valve element
11 contour-forming member
12 core member
13 insertion hole
14 stem sealing part
15 outside sealing part
16 mating recess
17 holding recess
20 sliding contact member
21 sliding contact part
22 mating rib
23 recess
24 slanted surface
30 O-ring

## Claims

1. A butterfly valve comprising
a cylindrical valve body,
a valve seat provided an inner circumferential surface of the valve body and provided with two facing through holes,
a disc shaped valve element configured to closely contact the valve seat to close a flow path,
valve stems passing through the through holes of the valve seat to support the valve element to be able to rotate with respect to the valve body, and
a sliding contact part provided at the valve element so as to be able to closely contact and slide with the valve seat at the time of rotation of the valve element,
the sliding contact part being configured so as reduce a frictional resistance with the valve seat or an amount of wear of the valve seat at the time of rotation of the valve element compared with a case where no sliding contact part is provided.

2. The butterfly valve according to claim 1, wherein the sliding contact part is a member separate from the valve element.

3. The butterfly valve according to claim 2, wherein the sliding contact part is an injection molded part formed with a ring-shaped parting line at its surface and the valve seat and the valve element closely contact each other at least radially outward from the parting line.

4. The butterfly valve according to claim 2 or 3, wherein the sliding contact part has a projection shaped mating projection formed in a ring shape and the valve element has a mating recess formed so as to mate with the mating projection.

5. The butterfly valve according to claim 4, wherein a sealing part configured so as to make the mating projection and the mating recess closely contact in the radial direction is provided.

6. The butterfly valve according to claim 5, wherein the sealing part is a projection provided at one of the mating projection or the mating recess or an elastic member arranged between the mating projection and the mating recess.
